## Europäisches Patentamt

## European Patent Office

## Office européen des brevets

(19)

(11) Veröffentlichungsnummer: **0 031 166**
**B1**

(12)

# EUROPÄISCHE PATENTSCHRIFT

(45) Veröffentlichungstag der Patentschrift:
07.03.84

(21) Anmeldenummer: 80108149.8

(22) Anmeldetag: 22.12.80

(51) Int. Cl.³: **C 04 B 43/02, B 01 F 5/02**

(54) Verfahren zur Herstellung von Wärmeisolierkörpern sowie Vorrichtung zur Durchführung des Verfahrens.

(30) Priorität: 21.12.79 DE 2951577

(43) Veröffentlichungstag der Anmeldung:
01.07.81 Patentblatt 81/26

(45) Bekanntmachung des Hinweises auf die Patenterteilung:
07.03.84 Patentblatt 84/10

(84) Benannte Vertragsstaaten:
AT BE CH FR GB IT LI NL SE

(56) Entgegenhaltungen:
DE - A - 2 241 113
DE - A - 2 705 535
DE - B - 1 671 186
FR - A - 2 333 622

(73) Patentinhaber: Grünzweig + Hartmann und Glasfaser AG, Bürgermeister-Grünzweig-Strasse 1-47, D-6700 Ludwigshafen am Rhein (DE)

(72) Erfinder: Kummermehr, Hans, Prinzregentenstrasse 25a, D-6700 Ludwigshafen (DE)

(74) Vertreter: KUHNEN & WACKER Patentanwaltsbüro, Schneggstrasse 3-5 Postfach 1729, D-8050 Freising (DE)

## Verfahren zur Herstellung von Wärmeisolierkörpern sowie Vorrichtung zur Durchführung der Verfahrens

*Beschreibung*

Die Erfindung betrifft ein Verfahren zur Herstellung eines Wärmeisolierkörpers unter Verformen eines Gemisches auf der Grundlage von Ärogelteilchen, Trübungsmittel und/oder anorganischen Fasern, bei dem diese Komponenten nach einem Einbringen in einen Behälter durch Verwirbelung vermischt werden, sowie eine Vorrichtung zur Durchführung dieses Verfahrens.

Aus der DE-B 19 54 992 ist eine Wärmeisolierung bekannt, deren Kern aus einem Gemisch von pyrogener Kieselsäure, Trübungsmittel und Fasern besteht, wobei der Kern von einer Umhüllung in der Form eines Glasseidengewebes umgeben ist. Dieses Gemisch wird vor dem Einfüllen in die sackartig ausgebildete Umhüllung und einem danach erfolgenden Verpressen einer Behandlung in einem Mischorgan unterzogen.

Ein hierfür anwendbares Mischverfahren ist beispielsweise aus der DE-B 16 71 186 bekannt. Das dort zu vermischende Gemisch besteht aus Siliziumoxid- bzw. Kieselsäure-Aerogel-Teilchen und keramischen Aluminiumsilikat- oder Kohlenstoffasern oder deren Gemischen. Zur Durchmischung werden diese Komponenten in einen Behälter gebracht, in diessen Bodenbereich ein Drehflügel angeordnet ist. Nach dem Schliessen des Behälters wird das Mischgut durch Drehen des Drehflügels verwirbelt und somit innig vermischt. Diesem Ärogel- und Fasermaterial wird in einer bevorzugten Ausführungsform vor dem Vermischen ein Trübungsmittel zugesetzt.

Pyrogene Kieselsäure-Ärogel-Teilchen besitzen in der Regel einen Teilchendurchmesser unter 1 μm und besitzen infolge ihrer grossvolumigen Struktur eine geringe Dichte. Diese Ärogele werden dadurch hergestellt, dass Siliziumtetrachlorid einer Pyrolyse-Behandlung unterzogen wird, wobei hochdispers verteilte Kieselsäure entsteht. Diese Kieselsäureteilchen lagern sich während des Abkühlens zu Agglomeraten zusammen, die im Mischvorgang aufgespalten werden müssen, um die gewünschte hohe Wärmeleitzahl zu erreichen. Da die Zusammensetzung eines derartigen Wärmeisoliermaterials meistens mehr also 50% Ärogel aufweist, ist nahezu das gesamte Raumvolumen des aus dem Wärmeisoliermaterial hergestellten Körpers mit den Ärogel-Teilchen und diese umgebender Luft angefüllt, wobei die Faserstoffe und das Trübungsmittel volumenmässig kaum ins Gewicht fallen.

Mit einem Drehflügel durchgeführte Mischversuche haben nunmehr gezeigt, dass es äusserst schwierig ist, ein aus mehr also 50 Gew.-% Ärogel-Teilchen bestehendes homogenes Gemisch herzustellen, das zusätzlich Verstärkungsfasermaterial und/oder Trübungsmittel enthält. Bei einem relativ geringen Zusatz von Trübungsmittel und/oder Fasermaterial zu einer grossen Menge Ärogel-Material ist häufig, auch nach mehrstündigem Rühren, kein einheitliches Gemisch zu erhalten. Der Drehflügel bewirkt nämlich nur eine Durchmischung in einem beschränkten Bereich, so dass die oberhalb des Drehflügels befindliche Materialmenge nur sehr langsam und zögernd nach unten wandert, um dort durchgemischt zu werden. Deshalb kommt es häufig vor, dass der bei hoher Drehgeschwindigkeit rotierende Drehflügel beim Durchmischen heissläuft und das durchzumischende Gut erhitzt, dieses jedoch nicht zufriedenstellend vermischt. Infolge der inhomogenen Durchmischung leidet die Qualität des Endproduktes, dessen Wärmeleitzahl und Wärmereflexionsvermögen nachteilig beeinflusst werden.

Der Erfindung liegt deshalb die Aufgabe zugrunde, ein Verfahren zur Herstellung eines Wärmeisolierkörpers zu schaffen, mit dem in einfacher Weise ein homogenes und einheitlich verteiltes Gemisch aus Isoliermittelteilchen, Fasergemischen und/oder Trübungsmittelteilchen erhalten werden kann, und zwar auch dann, wenn der Anteil an Isoliermittelteilchen am gesamten Gemisch über 50 Gew.-% beträgt. Ferner ist eine geeignete Vorrichtung für die Durchführung dieses Verfahrens zu finden.

Diese Aufgabe wird erfindungsgemäss dadurch gelöst, dass die Verwirbelung in einer Art Düse unter Verblasen der Ärogel-Teilchen, des Trübungsmittels und/oder der anorganischen Fasern durchgeführt wird.

Das erfindungsgemässe Verfahren weist die Vorteile auf, dass innerhalb einer relativ kurzen Zeitspanne, d.h. innerhalb höchstens 5 Minuten, eine vollständig homogene Mischung erhalten wird, deren Ärogel-Teilchen keine Aggregatstruktur mehr aufweisen. Mit dem Durchleiten der zu mischenden Komponenten durch eine Art Düse findet eine innige Verwirbelung dieser Teilchen untereinander statt, was zu einer gleichmässigen Vermischung und damit Verteilung dieser einzelnen Teilchen führt. Zusätzlich vermag die Verwirbelung in der Art Düse die Aggregate aufzubrechen, aus denen die Ärogel-Teilchen bestehen. Diese Eigenschaft, Aggregate aufzulösen, ist auf die hohe Geschwindigkeit, die die einzelnen Teilchen in der Art Düse selbst besitzen, und somit auf den hohen Aufpralldruck zurückzuführen, der bei dem Zusammenstoss derartiger Teilchen entsteht.

Wenn andererseits Luft als Beförderungsmittel für diese Teilchen verwendet wird, kann diese beim Zusammentreffen mit dem Mischgut ebenfalls diese Aufprallwirkung ausüben und einen Verstäubungseffekt bewirken. Die Luft dient also neben der fluidisierenden Wirkung auch zur Aufspaltung der Aggregate und zur einheitlichen Verteilung der das Mischgut bildenden Bestandteile. Die fluidisierende Wirkung selbst ist insofern vorteilhaft, als sie dem grossvolumigen, flauschartigen Mischprodukt einen fliessfähigen Charakter verleiht, so dass innerhalb kürzester Zeit ein hoher Mischumsatz erreicht wird. Zwar führt die Durchleitung von Luft durch das Mischgut zu einer Volumenvergrösserung; die beispielsweise das Doppelte bis das Dreifache des Ausgangsvolumens erreichen kann, bewirkt aber keine nachteiligen Folgen, da durch das nachfolgende Pressen und Evakuieren des Mischgutes die Luft wieder entfernt wird.

Die erfindungsgemässe Verfahrensweise zeichnet sich gegenüber dem Stand der Technik, gemäss dem mit breitflächigen Propellern gearbeitet wird, dadurch aus, dass die Durchmischung des Mischgutes auf engstem Raum, nämlich in einer Art Düse, mit hoher Umsatzgeschwindigkeit abläuft, was zu einer homogenen Mischung in kürzester Zeit führt.

Zur Herstellung eines homogenen Gemisches sind zwei Anordnungen der Düse in einem Mischgefäss möglich:

a) Die Art Düse wird tangential zur Behälterwand mit schräg nach oben gerichteter Auswurfrichtung derart angeordnet, dass das verblasene und aus der Düsenöffnung austretende Mischgut tangential an der Behälterwand schraubenförmig nach oben geführt wird. Am Scheitelpunkt der Aufwärtsbewegung kippt das nach oben gerichtete Mischgut in axialer Richtung in den Behälter zurück und wird durch ein erneutes Ansaugen am Behälterboden dem Mischvorgang wieder zugeführt. In einer bevorzugten Ausführungsform weist der Behälterboden eine kegelförmige Struktur auf, so dass das axial herabfallende Material über diese kegelförmige Struktur direkt in den Tangentialbereich des Mischgefässes, wo die Düse angeordnet ist, überführt wird. Durch diese stetig wiederkehrende Umwälzung des Mischgutes wird ein einheitlicher Verteilungsgrad im Endgemisch erreicht.

b) Andererseits kann eine homogene Durchmischung auch dadurch erreicht werden, dass das zu mischende Gut nur einmal durch die erfindungsgemässe Art Düse durchgeleitet wird. Dazu ist es nötig, dass bereits vor dem Verdüsen eine weitgehend homogene Vormischung erzeugt wird. Ein derartiges Vorgemisch kann in einem ersten Mischgefäss mit üblichen Rührern, wie Drehflügeln und dgl., hergestellt werden.

Eine derartige Vordurchmischung ist jedoch nicht notwendig, wenn mehrere Ansaugstutzen in diesem ersten Mischgefäss vorgesehen sind, die gemeinsam zur Art Düse geführt werden. Diese Vielzahl von Ansaugstutzen schafft eine statistisch einheitliche Mischung, die keine Inhomogenitäten mehr aufweist.

Durch das Vorgemisch bzw. durch die Vielzahl von Ansaugstutzen ist lediglich nur der eine Verfahrensschritt der Verdüsung notwendig, um die gewünschte hohe Homogenität der Mischung zu erreichen und die Aggregate der Ärogel-Teilchen aufzubrechen.

Das entstandene Gemisch kann deshalb direkt ohne einen weiteren Mischungsschritt in ein Silo überführt werden, aus dem das durchmischte Gut den weiteren Verarbeitungsschritten zugeführt wird.

Vor dem Mischen werden die zu mischenden Komponenten, also die Ärogel-Teilchen, das Trübungsmittel und die anorganischen Fasern in den Mischbehälter gegeben, wobei der Füllgrad höchstens 50% betragen soll. Dabei spielt die Reihenfolge und Art der Zugabe keine Rolle. Um eine Verstopfungsgefahr zu vermeiden, ist es zweckmässig, wenn die anorganischen Fasern zuvor in einem Reisswolf auf eine Länge von einigen Zentimetern zerrissen und zerkleinert werden. Nach dem Einfüllen kann die Mischbehandlung mit den nachstehend im einzelnen beschriebenen, düsenartig wirkenden Einrichtungen durchgeführt werden.

Als teilchenförmiges Isoliermaterial können Pulver- oder Faserteilchen oder deren Gemische in Frage kommen. Dabei kann es sich um Agglomerate von feinverteilten Teilchen mit einer Korngrösse unter 0,1 μm handeln, die eine röhrenfömige oder poröse Struktur besitzen. Zu derartigen Isolierstoffen gehören Quarz- oder Glasfasern, Aluminiumsilikatfasern sowie weitere keramische Fasern, pulverförmiges Aluminium oder Gemische aus Flugasche mit expandierter Kieselerde, feinteiliges Aluminium- oder Chromoxid und Ärogele, beispielsweise von Kieselsäure, Chromoxid, Thoriumoxid, Magnesiumhydrat, Aluminiumoxid oder deren Gemische. Diese Ärogele können, sofern sie eine aggregatspaltende Struktur besitzen oder hydrophobiert sind, auch als Dispergiermittel zur Aufspaltung der Aggregate eingesetzt werden. Zu derartigen Isolierstoffen gehört weiterhin die pyrogene Kieselsäure, die aus der chemischen Zersetzung von Siliziumtetrachlorid entsteht. Die Grösse dieser Teilchen liegt in einem Bereich von 0,3 μm, insbesondere unter 1 μm. Im allgemeinen besteht der nach dem Pressen hergestellte Wärmeisolierkörper bis zu 95 Gew.-% aus diesem Isoliermaterial, wobei vorzugsweise 30 bis 85 Gew.-% Isoliermaterial eingesetzt werden.

Als Trübungsmittel, das zur Erhöhung des Wärmereflexionsvermögens zugegeben wird, kommen entweder organische oder anorganische Verbindungen in Frage, die die thermische Strahlung streuen, absorbieren oder reflektieren können, wobei bei der Wahl der Substanzen auf die Einsatztemperatur geachtet werden muss. Die Korngrösse dieser Trübungsmittel liegt üblicherweise in einem Bereich von 0,5 bis 20 μm, vorzugsweise 1 bis 10 μm, wobei das Maximum der Häufigkeitsverteilung zwischen 2,5 und 5 μm liegen soll. Zu einsetzbaren Trübungsmitteln gehören Graphit und Russ, sofern die Temperatur nicht zu hoch ist, anorganische Oxide von Titan, die ggf. Eisen (III) – Oxid enthalten können (Ilmenit), Rutil, Chromoxid, Manganoxid, Eisenoxid sowie Karbide des Siliziums, Bors, Tantals oder Wolframs oder deren Gemische. Weiterhin lassen sich metallisches Aluminium, Wolfram oder Silizium, Zirkon, Titandioxid oder Bleimonoxid sowie weitere Stoffe einsetzen, die einen hohen Wärmereflexions- oder IR-Refraktionsindex besitzen. Diese Trübungsmittel können bis zu einer Menge von 60 Gew.-% in dem Wärmeisolierkörper vorliegen. Die eingesetzte Trübungsmittelmenge wird dabei nach der autretenden Wärmestrahlung gewählt, wobei die eingesetzte Trübungsmittelmenge mit steigender Temperatur ebenfalls ansteigt. Das Trübungsmittel besitzt ausserdem den Vorteil, dass es wegen seiner im Vergleich zum Isoliermittel grossen Korngrösse grössere Zwischenbereiche auszufüllen vermag, so dass hierdurch die thermische Leitfähigkeit des Endprodukts verringert und somit die thermische Qualität verbessert wird.

Als Trübungsmittel ist Ilmenit $FeTiO_3$ bevorzugt, da es sehr billig und ausserdem leicht vermahlbar ist. Dieses Trübungsmittel kann mit chemisch gebundenem Mangan verunreinigt sein. Vor dem Zugeben des Trübungsmittels zu den übrigen zu mischenden Bestandteilen ist es zweckmässig, andererseits jedoch nicht notwendig, das Trübungsmittel mit einem Dispergiermittel zu versehen, da dadurch die Einarbeitbarkeit des Trübungsmittel in die grosse Masse der feinkörnigen Teilchen erleichtert wird. Der Zusatz von Dispergiermittel kann dabei bereits beim Mahlen des Trübungsmittels erfolgen, wobei sich als Dispergiermittel die hydrophobierte Kieselsäure anbietet. Dieses Dispergiermittel wird mit dem Trübungsmittel in einem Gewichtsverhältnis von 2:98 bis 30:70, vorzugsweise 10:90 unter Bildung eines Vorgemisches innig so lange vermischt, bis eine gleichförmige und äusserst feine Verteilung dieser Bestandteile erhalten wird.

Als verstärkend wirkende anorganische Fasern können sämtliche Fasern eingesetzt werden, die die mechanischen Eigenschaften des Wärmeisolierkörpers, insbesondere die Oberflächenhafteigenschaften und die Flexibilität verbessern. Zu derartigen Fasern gehören Mineralfasern, beispielweise Basaltfasern oder Glasfasern, Asbestfasern und Aluminiumsilikatfasern. Der Faserdurchmesser soll dabei in einem Bereich von 1 bis 20, insbesondere 5 bis 10 μm liegen. Die Länge dieser Fasern liegt im allgemeinen bei einigen Millimetern bis einigen Zentimetern; im Endprodukt liegen diese Verstärkungsfasern dabei in einer Menge bis zu 40 Gew.-% vor.

Wird der nach dem Mischen und Verfestigen dieser Materialien erhaltene Wärmeisolierkörper einer mechanischen Beanspruchung ausgesetzt, so besteht infolge seiner relativ geringen mechanischen Festigkeit die Gefahr, dass diese zerbricht. Infolgedessen muss der Körper in eine Umhüllung, beispielsweise einen Sack, eingeschlossen werden, oder aber mit speziellen Bindemitteln gehärtet werden, um die gewünschte mechanische Steifigkeit und Festigkeit zu erhalten. Wird zur mechanischen Stabilisierung ein Bindemittel eingesetzt, so wird dieses ebenfalls vor dem Mischen in den Mischbehälter in Form von feingemahlenen Teilchen zugegeben.

Als Bindemittel können sämtliche anorganische oder organische Bindemittel eingesetzt werden, die durch Mahlen in eine Korngrösse unter 1 μm überführt werden können und unterhalb 700°C erweichen bzw. schmelzen, wodurch sie eine Verbindung mit den umgebenden Isoliermaterialteilchen eingehen können. Das Vermahlen dieser Bindemittelteilchen auf eine Korngrösse von 1 μm oder darunter lässt Bindemittelteilchen entstehen, die bei einer gleichförmigen Verteilung im Isolierkörper eine hohe mechanische Beständigkeit erzeugen. Die obere Temperaturgrenze von ca. 700°C ist deshalb zu beachten, weil oberhalb dieser Temperatur die Isoliermaterialteilchen zu sintern beginnen und dadurch die wärmedämmende Eigenschaft des Isolierkörpers verlorengeht.

Zu Bindemitteln auf anorganischer Basis gehören niederschmelzende Gläser, glasbildende Stoffe, Glaslote, Phosphate, Sulfate, Carbonate, Hydroxide oder Oxide der Alkali- oder Erdalkalimetalle, Natriumsilikate, Borate, Borax, Natriumperborat und deren Gemische. Vorzugsweise wird Soda oder Natriumsulfat eingesetzt, wobei diesem Natriumsulfat zur Reduzierung etwas feinkörniger Russ beigegeben wird.

Beispiele für Bindemittel auf organischer Basis, die für Niedrigtemperaturisolation eingesetzt werden, sind Harze von Phenol-Formaldehydtyp, Harnstoff-Formaldehydtyp, thermisch erweichbare Harze, wie PVC-Harze oder Kopolymere von Vinylchlorid und Vinylacetat oder Granulate von Polyurethan, Polyamiden, Polyäthylen, Siliconharze und dgl. Vorzugsweise werden feinstgemahlene Formaldehydharze oder Methylsiliconharze eingesetzt.

Im allgemeinen wird die Menge des eingesetzten Bindemittels anhand der gewünschten Steifigkeit und Biegefähigkeit der Platte bestimmt, wobei es regelmässig ausreicht, wenn die Platte durch den Zusatz des Bindemittels abriebfest wird. Üblicherweise wird das Bindemittel deshalb in einer Menge von 2 - 30 Gew.-%, insbesondere 5 - 10 Gew.-%, bezogen auf das Isoliermittel, eingesetzt.

Andererseits kann das zu pressende Gemisch auch in eine Umhüllung eingebracht werden, die beispielsweise in der DE-C 19 54 992 beschrieben ist. In dieser Umschliessung steht der Wärmeisolierkörper derart unter Druck, dass er hohen mechanischen Belastungen gewachsen ist und ausserdem gute Wärmeisoliereigenschaften besitzt.

Das erfindungsgemässe Verfahren zur Herstellung von Wärmeisolierkörpern wird anhand der Zeichnung, in der mehrere Ausführungsformen der zur Durchführung des erfindungsgemässen Verfahrens besonders geeigneten Vorrichtung dargestellt sind, erläutert.

Es zeigen:

Fig. 1 eine Draufsicht auf eine erste Ausführungsform der Erfindung, die eine Ringdüse darstellt,

Fig. 2 einen Längsschnitt durch die Ringdüse gemäss Fig. 1 entlang der Linie II-II,

Fig. 3 eine perspektivische Darstellung der Ringdüse gemäss Fig. 1, die am Boden eines Mischbehälters angeordnet ist,

Fig. 4 einen Längsschnitt durch eine Düse gemäss einer zweiten Ausführungsform der Erfindung,

Fig. 5 einen Längsschnitt durch eine Düse gemäss einer dritten Ausführungsform der Erfindung, die mit einem Radialgebläse verbunden ist, und

Fig. 6 einen Längsschnitt durch eine Düse gemäss einer vierten Ausführungsform, die in dem Ausgangsrohr ein Gebläserad aufweist.

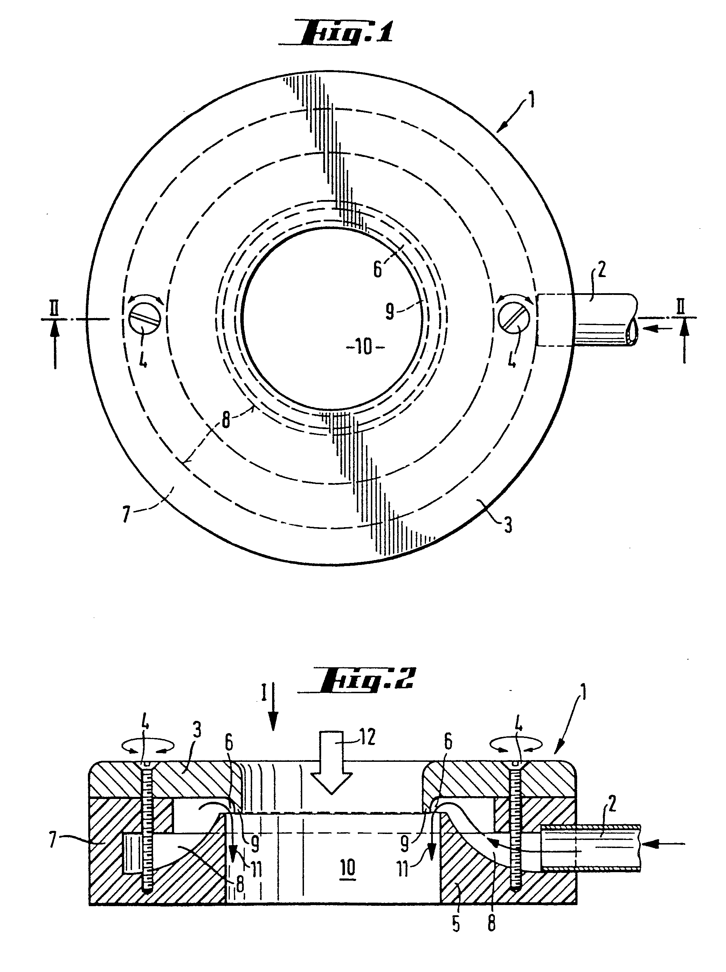

In Fig. 1, die die erste Ausführungsform der Erfindung zeigt, ist eine Ringdüse 1 dargestellt, in die durch den Einführungsstutzen 2 Luft, üblicherweise Pressluft, eingeführt wird. Die Ringdüse selbst besteht aus dem eintrittsseitigen Ringteil 3, das über Befestigungsmittel 4, üblicherweise justierbare Schrauben, mit dem austrittsseitigen Ringunterteil 5 derart befestigt ist, dass zwischen dem Ringteil 3 und dem Ringunterteil 5 ein Spalt 6 entsteht. Das Ringteil 3 liegt gasdicht an dem Aussenteil 7 an, das integral mit dem Ringunterteil 5 verbunden ist. Zwischen dem Ringteil 3 und dem Ringunterteil 5 ist ein Ringkanal 8 gebildet, der sich vom Einführungsstutzen 2 bis zum Spalt 6 erstreckt. Der Spalt 6 kann in seiner Breite dadurch justiert werden, dass über die Befestigungsmittel 4 das Ringteil 3 in axialer Richtung verschoben wird. Durch die Verbreiterung des Spaltes 6 kann der Luftdurchsatz und die Austrittsgeschwindigkeit der Luft entsprechend der gewünschten Durchmischung eingestellt werden. Das Ringteil 3 besitzt an seiner radialen Innenseite eine Umlenklippe 9, die den über den Ringkanal 8 aus dem Spalt 6 austretenden Luftstrom axial zur Ringdüse austreten lässt. Der an dieser Umlenklippe 9 gebildete Ringspalt 6 besitzt somit eine quer zur Ringdüsenachse liegende Öffnungsebene.

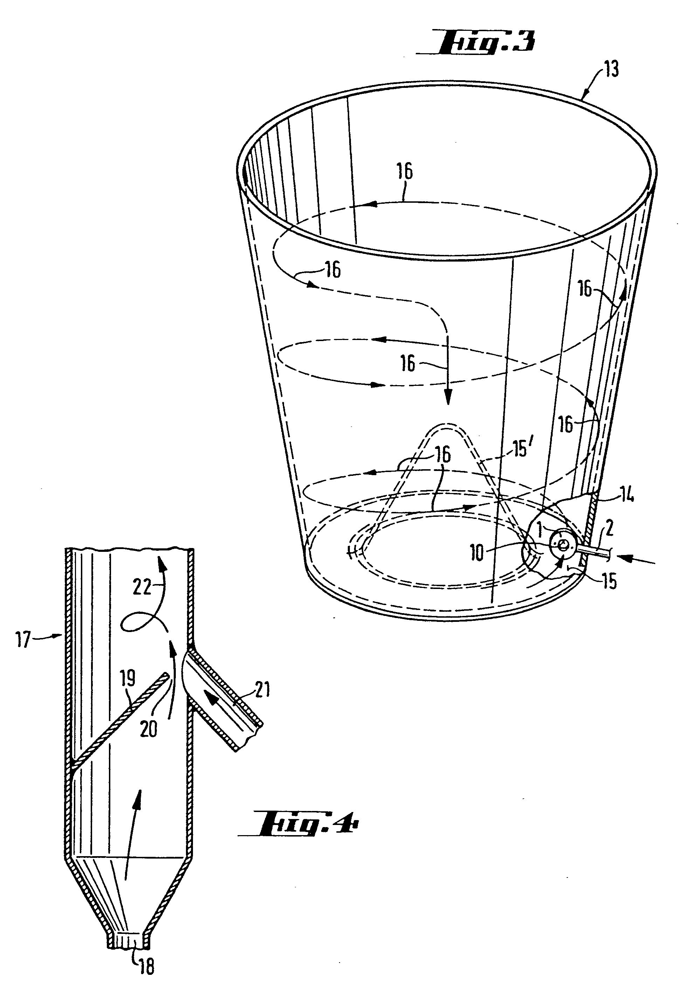

Zur Vermischung des Mischgutes wird Luft über den Einführungsstutzen 2 in den Ringkanal 8 geleitet. Diese zugeführte Luft tritt aus dem Spalt 6 in die Ringöffnung 10 aus, wobei ihr über die Umlenklippe 9 eine axiale Austrittsrichtung verliehen wird. Die Führung dieses Luftstromes ist mit den Pfeilen 11 in Fig. 2 angegeben. Aufgrund der axialen Austrittsrichtung entsteht auf der Eintrittsseite der Ringdüse ein Sog, der mit dem Pfeil 12 gekennzeichnet ist. Durch diesen Sog wird das zu vermischende Mischgut in die Ringöffnung 10 gerissen, in der es mit der austretenden Luft verwirbelt, d.h. fluidisiert und vermischt wird.

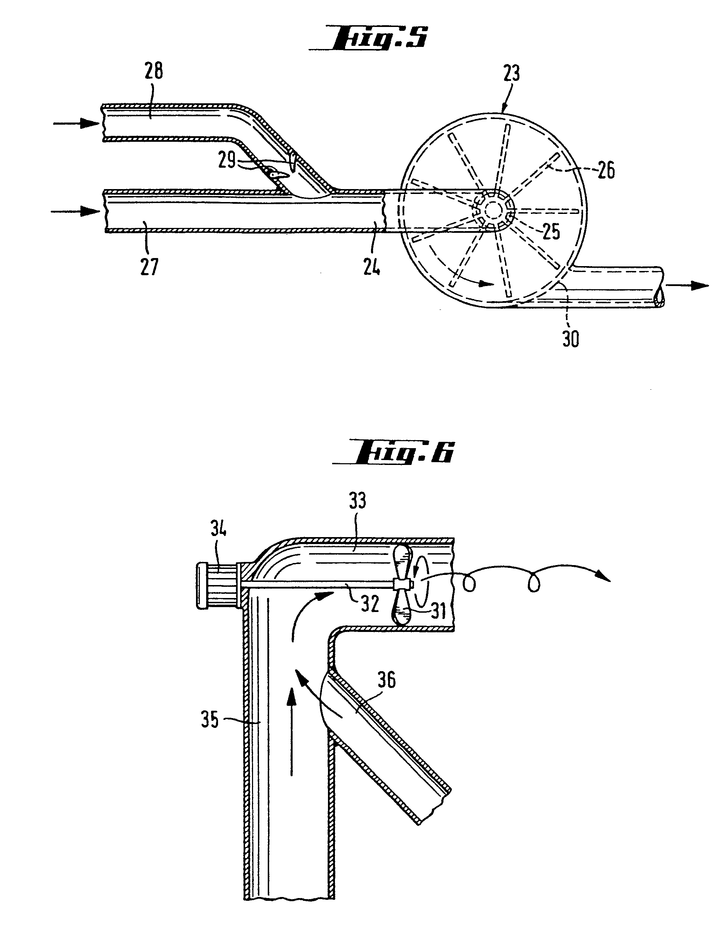

In Fig. 3 ist die Anordnung der Ringdüse 1 im Bodenbereich eines Mischbehälters 13 prinzipiell dargestellt. Der Einführungsstutzen 2 durchsetzt dabei die Wand 14 des Mischbehälters 13, so dass von aussen die gewünschte Luftmenge zugeführt werden kann. Vorzugsweise weist der mit 15 bezeichnete Boden des Mischbehälters 13 eine nach innen gewölbte Form auf, so dass das axial zurückströmende Mischgut infolge der Schwerkraft tangential nach aussen geführt wird. In Fig. 3 ist diese nach innen gewölbte Form des Bodens 15 kegelförmig bei 15' dargestellt. Andererseits kann der Boden 15 auch eben ausgebildet sein, da der an der Ringdüseneintrittsseite entstehende Sog das Mischgut in ausreichender Weise anzusaugen vermag. Diese radial nach aussen führende Materialbewegung kann auch durch einen im Bodenbereich des Mischbehälters 13 vorzusehenden Drehflügel, der das Mischgut radial nach aussen befördert, unterstützt werden.

In dem Mischbehälter 13 ist die Ringdüse 1 derart angeordnet, dass das austretende Mischgut eine in bezug auf die Behälterwand 14 tangentiale Austrittsrichtung aufweist, der eine vertikale Bewegungskomponente überlagert ist. Dies führt zu einer schraubenförmig nach oben gerichteten Bewegungsbahn 16 des Mischgutes entlang der Innenwand des Mischbehälters 13. Am Scheitelpunkt dieser Aufwärtsbewegung stürzt das Mischgut axial in der Mitte des Mischbehälters 13 zum Boden 15 zurück und wird vorzugsweise durch die gewölbte Form des Bodens 15 oder durch einen im Bodenbereich vorgesehenen Drehflügel radial nach aussen befördert, um wiederum in der Ringdüse 1 durchmischt zu werden.

Der Durchmesser der Ringöffnung 10 kann in einem weiten Bereich variieren, wobei dieser Durchmesser mit dem Volumen des Mischbehälters 13 zu korrelieren ist. Bei Mischversuchen hat sich gezeigt, dass für ein Mischvolumen von 100 Litern eine Ringdüse 1 zufriedenstellende Ergebnisse liefert, deren Ringöffnung 10 einen Durchmesser von 20 mm aufweist. Das Mischgut muss natürlich in einer solchen Düse so lange gemischt werden, bis die Agglomerate der Teilchen aufgespalten sind und weiterhin eine gleichförmige Vermischung gewährleistet ist. Mikroskopische Untersuchungen und Untersuchungen der Wärmeleitfähigkeit des Endproduktes haben gezeigt, dass nach höchstens 5, in der Regel 3 Minuten Mischdauer ein homogenes Gemisch erhalten wird, das keine Agglomerate mehr aufweist und die angestrebten Wärmeleitzahlen besitzt.

In Fig. 4 ist die zweite Ausführungsform der Erfindung dargestellt. In dieser mit 17 bezeichneten Düse wird das Fluidisierungsmittel, üblicherweise Luft, über eine Eintrittsöffnung 18 in die Düse 17 eingeleitet. Schräg zur Hauptachse erstreckt sich innerhalb der Düse eine Ablenkwand 19 derart, dass zwischen der Düsenwand und der Ablenkwand 19 ein Spalt 20 entsteht. In Höhe dieses Spaltes 20 mündet seitlich ein Zuführungsrohr 21 in die Düsenwand, über welches das Mischgut der Düse 17 zugeführt wird. Letzteres erfolgt durch die an dem Spalt 20 nach dem Prinzip einer Wasserstrahlpumpe entstehende Sogwirkung, wobei eine zusätzliche Zuführung durch eine geeignete Fördervorrichtung, beispielsweise ein Gebläse, möglich ist. Da an dem Spalt 20 eine starke Luftströmung mit hoher Geschwindigkeit durch das Ablenken der zugeführten Luft an der Ablenkwand 19 auftritt, wird das mitgerissene Mischgut sowohl stark fluidisiert als auch sehr gut durchgemischt. Hinter dem Spalt 20 tritt das innig durchgemischte Gut, wie durch den Pfeil 22 gezeigt, in stark verwirbeltem Zustand aus der Düse aus.

Die Düse 17 kann ebenfalls wie die Ringdüse 1 am Boden des Mischbehälters 13 vorgesehen werden (nicht dargestellt), wobei hier das Zuführungsrohr 21 durch die Behälterwand 14 hindurchgreift. Der Luftdurchsatz und die Mischzeiten entsprechen hier den bei der Ringdüse 1 angegebenen Parametern.

In der in Fig. 5 gezeigten dritten Ausführungsform werden einem Radialgebläse 23 sowohl Luft als auch das Mischgut in einer gemeinsamen Leitung 24 zugeführt, die axial im Zentrum des Radialgebläses 23 in die Öffnung 25 mündet. An der der Öffnung 25 gegenüberliegenden Seitenwand des Radialgebläses 23 durchsetzt die Achse des Gebläserades 26 die Gehäusewand. Die Leitung 24 verzweigt sich auf der Zuführungsseite in die Leitung 27, über die das Mischgut zugeführt wird, und in die Leitung 28, über die die Luft zugeführt wird. Zur Einstellung der gewünschten Strömungsverhältnisse und Durchsatzmengen ist in der Leitung 28 ein Ventil 29 vorgesehen, über das die Luftmenge eingestellt werden kann. Die Zuführung des Mischgutes in Verbindung mit der Luft wird hier die Sogwirkung des Radialgebläses 23 unterstützen.

Bei dieser dritten Ausführungsform werden die zu vermischenden Komponenten zuerst nach dem Prinzip einer Wasserstrahlpumpe mit Luft verwirbelt, danach in das Radialgebläse 23 axial durch die Öffnung 25 eingebracht und nach einem weiteren Verwirbeln und Fluidisieren tangential aus diesem ausgetragen, wobei das fluidisierte Mischgut über die Austragsöffnung 30 wiederum in den Mischbehälter gelangt. Die Anordnung dieses Radialgebläses 23 kann in gleicher Weise, wie vorstehend beschrieben, innerhalb des Mischbehälters 13 erfolgen, wobei ähnliche Ergebnisse bei gleichen Mischzeiten und gleichem Luft- und Materialdurchsatz erhalten werden.

Fig. 6 zeigt schliesslich die vierte Ausführungsform der Erfindung, gemäss der ein Gebläserad 31, dessen Antriebsachse 32 mit der Achse eines Leitungsrohres 33 zusammenfällt. Dieses Gebläserad 31 wird über ein Antriebsaggregat 34 angetrieben. Der Durchmesser des Gebläserades 31 entspricht dabei dem Innendurchmesser des Leitungsrohres 33, so dass sämtliche, durch das Leitungsrohr 33 beförderte Stoffe mit dem Gebläserad 31, das beispielsweise die Form eines Drehflügels haben kann, in Berührung kommen. Das zu vermischende Gut und die Luft werden über die Leitungen 35 bzw. 36 zugeführt, wobei zusätzlich zu der durch das Gebläserad 31 erzeugten Sogwirkung eine Zuführungshilfe, beispielsweise ein Gebläse, zum Einsatz kommen können. Vorteilhafterweise ist das Rohr 33 an der Stelle gekrümmt, wo die Antriebsachse 32 eingeführt wird. Andererseits kann das Leitungsrohr 33 auch gerade ausgebildet sein, wenn die Antriebsachse 32 abgewinkelt aus diesem Leitungsrohr 33 geführt wird. Das mit hoher Drehzahl, beispielsweise 3000 Umdrehungen/Minute laufende Gebläserad 31 erzeugt einen starken Sog und einen hohen Mischgrad, so dass die in dieser als eine Art Düse wirkenden Einrichtung mit Luft durchmischten Komponenten eine hohe Homogenität und keine Agglomerate mehr aufweisen. Die Anordnung dieser Düse in dem Mischbehälter 13 kann der vorstehenden Anordnung entsprechen, wobei ebenfalls gute Ergebnisse mit ähnlichen Mischzeiten und zugeführten Luft- und Materialmengen erhalten wurden.

## Patentansprüche

1. Verfahren zur Herstellung von Wärmeisolierkörpern unter Verformen eines Gemisches auf der Grundlage von Ärogelteilchen, Trübungsmittel und/oder anorganischen Fasern, bei dem diese Komponenten nach einem Einbringen in einen Behälter durch Verwirbelung vermischt werden, dadurch gekennzeichnet, dass die Verwirbelung in einer Art Düse (Fig. 1, 2, 4, 5, 6) unter Verblasen der Ärogel-Teilchen, des Trübungsmittels und/oder der anorganischen Fasern durchgeführt wird.

2. Verfahren nach Anspruch 1, dadurch gekennzeichnet, dass zum Verblasen der zu vermischenden Komponenten Luft zugeführt wird.

3. Verfahren nach Anspruch 1 oder 2, dadurch gekennzeichnet, dass die zu vermischenden Komponenten in einer Ringdüse (1) vermischt werden.

4. Verfahren nach Anspruch 3, dadurch gekennzeichnet, dass mittels der Breite eines Spalts (6) der Ringdüse (1) deren Luftdurchsatz und Mischgrad verändert wird.

5. Verfahren nach Anspruch 3 oder 4, dadurch gekennzeichnet, dass die Strömungsgeschwindigkeit in der Ringdüse (1) durch eine an einem Ringteil (3) vorgesehene Umlenklippe (9) erhöht wird.

6. Verfahren nach Anspruch 2, dadurch gekennzeichnet, dass die in der Düse (17) zugeführte Luft an einer Ablenkwand (19) vorbeigeführt wird, in deren Bereich mit der Düsenwand ein Spalt (20) gebildet wird, bei welchem das Mischgut über ein Zuführungsrohr (21) zugeführt wird.

7. Verfahren nach Anspruch 2, dadurch gekennzeichnet, dass die zu vermischenden Komponenten nach dem Prinzip einer Wasserstrahlpumpe mit Luft verwirbelt werden, danach in ein Radialgebläse (23) axial eingebracht und nach einem weiteren Verwirbeln tangential aus diesem ausgetragen werden.

8. Verfahren nach Anspruch 2, dadurch gekennzeichnet, dass die zu vermischenden Komponenten nach dem Prinzip einer Wasserstrahlpumpe mit Luft verwirbelt und durch ein Leitungsrohr (33) zu einem Gebläserad (31) zum Zwecke einer weiteren Verwirbelung gefördert werden.

9. Verfahren nach einem der vorhergehenden Ansprüche, dadurch gekennzeichnet, dass die Art Düse (1, 17) am Boden (15) des Behälters (13) derart vorgesehen ist, dass das aus der Düse beförderte Gemisch eine tangentiale, schraubenförmige Bewegungsbahn entlang der Behälterwand durchläuft.

10. Verfahren nach einem der vorhergehenden Ansprüche, dadurch gekennzeichnet, dass der Behälter (13) mit einem nach innen gewölbten Boden (15') ausgebildet wird.

11. Verfahren nach einem der Ansprüche 1 bis 9, dadurch gekennzeichnet, dass eine weitere Verwirbelung durch einen am Boden (15) des Behälters (13) vorgesehenen Drehflügel erfolgt.

12. Verfahren nach einem der vorhergehenden Ansprüche, dadurch gekennzeichnet, dass die Zuführung des Mischgutes mittels eines Förderaggregats, z.B. einer Förderschnecke, erfolgt.

13. Vorrichtung zur Durchführung des Verfahrens nach einem des Ansprüche 1 bis 5 oder 9 bis 12, dadurch gekennzeichnet, dass im Bodenbereich eines Mischbehälters (13) zur Beschleunigung der zu vermischenden Komponenten eine Ringdüse (1) vorgesehen ist, durch deren Ringspalt (6) hindurch ein Luftstrom in das zu vermischende Gut mit bezüglich der Ringdüse (1) axialer Komponente einführbar ist.

14. Vorrichtung nach Anspruch 13, dadurch gekennzeichnet, dass der Ringspalt (6) der Ringdüse (1) in seiner Breite veränderbar gehalten ist.

15. Vorrichtung nach Anspruch 13 oder 14, dadurch gekennzeichnet, dass im Bereich des Ringspaltes (6) der Ringdüse (1) eine Umlenklippe (9) zur axialen Umlenkung der ausströmenden Luft vorgesehen ist.

16. Vorrichtung zur Durchführung des Verfahrens nach Anspruch 6, dadurch gekennzeichnet, dass zu Beschleunigung der zu vermischenden Komponenten eine Düse (17) mit einer Ablenkwand (19) vorgesehen ist, wobei im Bereich eines durch die Ablenkwand (19) und die Düsenwand gebildeten Spaltes (20) ein Zuführungsrohr (21) für das Mischgut vorgesehen ist.

17. Vorrichtung zur Durchführung des Verfahrens nach Anspruch 7, dadurch gekennzeichnet, dass zur Beschleunigung der zu vermischenden Komponenten ein Radialgebläse (23) vorgesehen ist, dessen Zentralbereich eine Anschluss-Öffnung (25) für eine Luft und Mischgut führende Leitung (24) aufweist, und dessen Umfangswand eine Austragöffnung (20) für das fluidisierte Mischgut aufweist.

18. Vorrichtung zur Durchführung des Verfahrens nach Anspruch 8, dadurch gekennzeichnet, dass zur Beschleunigung der zu vermischenden Komponenten ein in einem Leitungsrohr (33) für Luft und das Mischgut angeordnetes Gebläserad (31) zur Erzielung einer axialen Förderung in dem Leitungsrohr (33) vorgesehen ist.

## Claims

1. Process for the manufacture of heat insulating bodies by the shaping of a mixture based on particles of an aerogel, a clouding agent and/or inorganic fibres, in which these components are mixed by swirling agitation after being introduced into a container, characterised in that the vortex agitation is carried out in a kind of jet (Fig. 1, 2, 4, 5, 6) with blowing of the aerogel particles, the clouding agent and/or the inorganic fibres.

2. Process according to claim 1, characterised in that air is introduced for the blowing of the components that are to be mixed.

3. Process according to claim 1 or 2, characterised in that the components to be mixed are mixed in a ring jet (1).

4. Process according to claim 3, characterised in that the throughput of air and the degree of mixing is varied, by means of the breadth of a slot (6) in the ring jet (1).

5. Process according to claim 3 or 4, characterised in that the velocity of the stream in the ring jet (1) is increased by a deflecting lip (9) provided on a portion of the ring (3).

6. Process according to claim 2, characterised in that the air introduced into the jet (17) is conducted past a deflecting wall (19), in the region of which a slit (20) is formed with the jet wall, whereby the material to be mixed is introduced by means of an inlet pipe (21).

7. Process according to claim 2, characterised in that the components to be mixed are subjected to vortex action with air by the principle of a water-jet vacuum pump, then introduced axially into the radial blower (23), and after further subjection to swirling agitation are withdrawn tangentially from the latter.

8. Process according to claim 2, characterised in that the components to be mixed are subjected to swirling agitation with air by the principle of a water-jet vacuum pump and are conducted by a pipe (33) to a blower rotor (31) for the purpose of a further subjection to vortex action.

9. Process according to any one of the preceding claims, characterised in that the kind of jet (1, 17) is provided at the base (5) of the container (13) in such a way that the mixture discharged from the jet follows a tangential helical path along the container wall.

10. Process according to any one of the preceding claims, characterised in that the container (13) is formed with an inwardly bulging base (15').

11. Process according to any one of claims 1 to 9, characterised in that a further subjection to swirling agitation results from a rotor provided on the bottom (15) of the container (13).

12. Process according to any one of the preceding claims, characterised in that the introduction of the material to be mixed takes place by means of a conveyor apparatus, for example a worm conveyor.

13. Apparatus for carrying out the process according to any one of claims 1 to 5 or 9 to 12, characterised in that a ring jet (1) is provided in the bottom part of a mixing container (13) for the acceleration of the components to be mixed, through the ring slot (6) of which jet an air stream can be introduced into the material to be mixed with components which are axially relative to the ring jet (1).

14. Apparatus according to claim 13, characterised in that the ring slot (6) of the ring jet (1) is mounted so as to be of variable width.

15. Apparatus according to claim 13 or 14, characterised in that, in the region of the ring slot (6) of the ring jet (1) there is provided a deflecting lip (9) for the axial deflection of the emerging air.

16. Apparatus for carrying out the process according to claim 6, characterised in that, for the acceleration of the components to be mixed there is provided a jet (17) with a deflecting wall (19), so that in the region of a slot formed by the deflecting wall (19) and the wall of the jet, there is provided an inlet pipe (21) for the material to be mixed.

17. Apparatus for carrying out the process according to claim 7, characterised in that a radial blower (23) is provided to accelerate the components to be mixed, the central area of which blower has a junction opening (25) for an inlet pipe (24) for air and material to be mixed, and the circumferential wall of which has a discharge opening (20) for the fluidised material.

18. Apparatus for carrying out the process of claim 8, characterised in that, in order to accelerate the components to be mixed, a blower rotor (13) arranged in an inlet pipe (33) for air and for the material to be mixed is provided in order to attain an axial feed in the inlet pipe (33).

**Revendications**

1. Procédé de fabrication de corps isolants thermiques comportant le moulage d'un mélange à base de particules d'aérogel, d'agent de turbidité et/ou de fibres inorganiques, dans lequel on mélange ces composants par mise en mouvement tourbillonnaire après les avoir introduits dans un récipient, caractérisé en ce que la mise en mouvement tourbillonnaire est réalisée dans une sorte de buse (figures 1, 2, 4, 5 et 6), avec soufflage des particules d'aérogel de l'agent de turbidité et/ou des fibres inorganiques.

2. Procédé selon la revendication 1, caractérisé en ce que, pour le soufflage des composants à mélanger, on introduit de l'air.

3. Procédé selon la revendication 1 ou 2, caractérisé en ce que les composants à mélanger sont mélangés dans une buse annulaire (1).

4. Procédé selon la revendication 3, caractérisé en ce qu'on fait varier le débit d'air et le taux de mélangeage en agissant sur la largeur d'une fente (6) de la buse annulaire (1).

5. Procédé selon la revendication 3 ou 4, caractérisé en ce que la vitesse d'écoulement dans la buse annulaire (1) est augmentée par une lèvre de changement de direction (9) prévue sur une partie annulaire (3).

6. Procédé selon la revendication 2, caractérisé en ce qu'on fait passer l'air acheminé à la buse (17) le long d'une paroi déflectrice (19) dans la région de laquelle il se forme avec la paroi de la buse une fente (20) au niveau de laquelle le produit à mélanger est acheminé par l'intermédiaire d'un tube d'arrivée (21).

7. Procédé selon la revendication 2, caractérisé en ce que les composants à mélanger sont mis en mouvement tourbillonnaire avec de l'air selon le principe d'une trompe à eau puis introduits axialement dans un ventilateur radial (23) et, après une nouvelle mise en mouvement tourbillonnaire, sont extraits tangentiellement de ce ventilateur.

8. Procédé selon la revendication 2, caractérisé en ce que les composants à mélanger sont mis en mouvement tourbillonnaire avec de l'air selon le principe d'une trompe à eau et transportés par un tube de conduite (33) à une roue de ventilateur (31) dans le but de réaliser une nouvelle mise en mouvement tourbillonnaire.

9. Procédé selon l'une quelconque des revendications précédentes, caractérisé en ce que la sorte de buse (1, 17) est prévue au fond (15) du récipient (13) de telle manière que le mélange transporté à la sortie de la buse décrive une trajectoire tangentielle hélicoïdale le long de la paroi du récipient.

10. Procédé selon l'une quelconque des revendications précédentes, caractérisé en ce que le récipient (13) est réalisé avec un fond (15') bombé vers l'intérieur.

11. Procédé selon l'une des revendications 1 à 9, caractérisé en ce qu'une nouvelle mise en mouvement tourbillonnaire est assurée par une palette rotative prévue au fond (15) du récipient (13).

12. Procédé selon l'une des revendications précédentes, caractérisé en ce que l'acheminement du produit à mélanger s'effectue au moyen d'un groupe transporteur, par exemple d'une vis transporteuse.

13. Appareil pour la mise en oeuvre du procédé selon l'une des revendications 1 à 5 ou 9 à 12, caractérisé en ce que, dans la région du fond d'un récipient mélangeur (13), est prévue, pour l'accélération des composants à mélanger, une buse annulaire (1) à travers la fente annulaire (6) de laquelle on peut introduire un courant d'air dans le produit à mélanger, avec une composante axiale par rapport à la buse annulaire (1).

14. Appareil selon la revendication 13, caractérisé en ce que la fente annulaire (6) de la buse annulaire (1) est réalisée réglable en largeur.

15. Appareil selon la revendication 13 ou 14, caractérisé en ce que, dans la région de la fente annulaire (6) de la buse annulaire (1), est prévue une lèvre de changement de direction (9) servant à renvoyer axialement l'air sortant.

16. Appareil pour la mise en oeuvre du procédé selon la revendication 6, caractérisé en ce que, pour l'accélération des composants à mélanger, il est prévu une buse (17) munie d'une paroi déflectrice (19), dans laquelle il est prévu, dans la région d'une fente (20) formée par la paroi déflectrice (19) et la paroi de la buse, un tube d'arrivée (21) pour le produit à mélanger.

17. Appareil pour la mise en oeuvre du procédé selon la revendication 7, caractérisé en ce que, pour l'accélération des composants à mélanger, est prévu un ventilateur radial (23) dont la région centrale présente un orifice de raccordement (25) pour une conduite (24) qui conduit de l'air et un produit à mélanger, et dont la paroi périphérique présente une ouverture d'extraction (20) pour le produit à mélanger fluidisé.

18. Appareil pour la mise en oeuvre du procédé selon la revendication 8, caractérisé en ce que, pour l'accélération des composants à mélanger, il est prévu une roue de ventilateur (31) disposée dans un tube de conduite (33) pour la circulation de l'air et du produit à mélanger, pour obtenir un transport axial dans le tube de conduite (33).

**Fig.1**

**Fig.2**

Fig.3

Fig.4

**Fig. 5**

**Fig. 6**